# EUROPEAN PATENT APPLICATION

(11) **EP 2 687 288 A1**
(43) Date of publication of application: **22.01.2014**
(21) Application number: 12382289.2
(22) Date of filing: 19.07.2012
(51) Int. Cl.: B01J 21/06, G01N 21/31

(54) **Method for predicting the efficiency of a TIO2 photocatalyst**

(71) Applicant: Sociedad española de carburos metalicos, S.A., 08009 Barcelona (ES)
(72) Inventor: OSSÓ TORNÉ, JOSEP ORIOL, 08193 BELLATERRA (ES); VEGA FERNÁNDEZ, MARÍA LOURDES, 08193 BELLATERRA (ES); ROSCINI, CLAUDIO, 08029 BARCELONA (ES); BOURDELANDE FERNÁNDEZ, JOSÉ LUIS, 08192 SANT QUIRZE DEL VALLES (ES); HERNANDO CAMPOS, JORDI, 08940 CORNELLÀ DE LLOBREGAT (ES)
(74) Representative: Oficina Ponti, SLP

(57) **Abstract**

The present invention relates to a method for predicting the efficiency of a TiO₂ photocatalyst in a light-induced reaction

## Description

### FIELD OF THE INVENTION

The present invention relates to the field of photocatalysts and in particular relates to a method for predicting the efficiency of a TiO₂ photocatalyst in a light-induced reaction. More in particular, said light-induced reaction is the photoreduction of CO₂.

### BACKGROUND

The combustion of fossil fuels, as the main source of energy production, releases large amounts of CO₂ into the atmosphere. As regulations on CO₂ emissions are being established, the main short-term solution to a relevant reduction of emissions includes Carbon Capture and Sequestration (CCS) technologies. The goal of CCS is to capture CO₂ at big emission sources and confine it in large storage sites as underground caverns. Thus, since large amounts of CO₂ will be treated as a waste for its storage, any process or technology able to transform CO₂ into valuable products may represent a path to reuse or revalorize the captured CO₂.

Many strategies that use the UV-VIS radiation to induce CO₂ conversion to beneficial products have been developed during the last years (photochemical methods). Unfortunately, direct CO₂ photoexcitation cannot be performed with conventional irradiation systems, therefore alternative and indirect photochemical methods to activate
the inert CO₂ molecules have been studied, among them:
- Solar photochemical reduction of CO₂ to CO, H₂CO₂, H₂CO, CH₃OH, CH₄ using semiconductor nanoparticles;
- Electrochemical reduction of CO₂ (and water) using energy generated by solar cells;
- Photoelectrochemical reduction of CO₂ using semiconductors and surface modified electrodes;
- Homogeneous and heterogeneous catalytic hydrogenation of CO₂ to form hydrocarbons and CH₃OH using solar generated H₂;
- Photosynthetic bacteria and algae-based CO₂ fixation (and H₂ production).

The present application focuses on the photochemical reduction of CO₂ using heterogeneous catalysis based on TiO₂-doped nanoparticles, although the technical advance reported here can be extended to other photochemical light-induced reactions.

In the literature there are many examples of photocatalytic systems based on TiO₂ semiconductors. In particular, efforts are concentrated on the modification of the semiconductor composition to achieve:
- Inhibition of the electron-hole recombination by promoting charge separation with the aim to enhance the photocatalytic efficiency;
- A bathochromic shift of the absorption band of the semiconductor towards the visible region;
- A change in the selectivity and/or yield of the photocatalytic process.

In the literature many examples of systems for the CO₂ photoreduction via TiO₂ photocatalysis are described. In each case the efficiency and selectivity of the process are strictly dependent on the adopted experimental conditions. CO₂ pressure (in solid-gas systems) or CO₂ concentration (in solid-liquid systems), temperature, irradiation time and light intensity and wavelength are some of the most important parameters. Moreover, the type of photocatalyst used, the presence of dopants, the sacrificial agent and the nanoparticle size are other intrinsic key factors that determine the photocatalytic process efficiency.

The present application aims at developing a novel methodology to predict the efficiency of TiO₂ photocatalysts for a light-induced reaction, in particular CO₂ reduction. Different types of small- and large-scale photoreactors to assay CO₂ photoreduction have been developed during the last years. However, systems that can reach significant results in terms of rate, yield and selectivity of product formation are difficult to find. Moreover, the costs of the photoreactor design and building, the large amount of materials (photocatalysts, solvents, additives, etc.) required in a reactor test, and in particular the long time needed for the setup and evaluation of the photoreaction for each catalyst under study evidence the need for developing new methodologies that predict, through rapid and non-consuming material measurements, which catalytic system and experimental conditions are suitable to be scaled up in a reactor. The present inventors have surprisingly found that the use of transient absorption spectroscopy allows achieving this goal.

Transient absorption (TA) spectroscopy provides information about the lifetime and absorption spectra of short-lived transient species (triplet states, radicals, etc.) that are directly or indirectly generated by irradiation with a laser pulse. In TA spectroscopy time resolution is limited by the width of the laser pulse and/or the detector. Therefore, any transient species whose lifetime is longer than this timescale can be detected by this technique. In the present application, it is surprisingly shown the potential of TA spectroscopy to evaluate the efficiency of photocatalysts for CO₂ reduction by applying this technique to a variety of metal-doped TiO₂ semiconductor nanoparticles.

TA spectroscopy as an evaluation tool of the activity of photocatalysts displays a number of advantages: (a) it is extremely sensitive, which allows the use of a very little amount of catalyst in each experiment (µg-mg scale); (b) it is a non-time consuming technique, which allows a given sample to be characterized in the period of few minutes instead of the hours-days typically needed in photoreactor experiments to obtain measurable signals; (c) it can be used to detect transient species within a wide range of timescales (from fs to s) by proper selection of the experimental conditions (namely, the pulsed laser and detector). Therefore, fast screening of many different experimental conditions for photocatalyzed reactions, such as CO₂ reduction (i.e., photocatalyst, solid-liquid and solid-gas conditions, temperature, pH, excitation wavelength, etc.) can be performed with this technique without consuming a significant amount of material, thus allowing fine tuning of the optimal parameters to attain the desired photoinduced process.

Accordingly, the present inventors have surprisingly found that a qualitative and quantitative determination can be carried out at any temperature, preferably at room temperature, of the photoinduced interaction between TiO₂ and a reagent involved in a light-induced reaction, preferably reduction of CO₂, by means of transient absorption spectroscopy.

### BRIEF DESCRIPTION OF THE DRAWINGS

**Figure 1****:** Transient absorption decays of Degussa P25 photocatalyst suspended in acetonitrile (figure 1a, measured at 400 nm) and in basic water (figure 1b, measured at 390 nm) under different atmospheres (irradiation at 355 nm).
**Figure 2****:** Transient absorption decays of Ru- (figure2a) and Pt- (figure 2b) doped TiO₂ nanoparticles measured at 600 nm upon excitation at 532 nm.
**Figure 3****:** Comparison of TA results obtained by exciting TiO₂-based photocatalysts in acetonitrile at 2 mW (figure 3a, bars) and 4.5 mW (figure 3b, bars) with the photoreactor data (line).
**Figure 4****:** Comparison of transient absorption results obtained exciting TiO₂-based photocatalysts in water (bars) with the photoreactor data (line).

### DETAILED DESCRIPTION OF THE INVENTION

The present invention relates to a method for predicting the efficiency of a TiO₂ photocatalyst in a light-induced reaction comprising the steps of:
a) preparing a suspension of a TiO₂ photocatalyst with a suitable solvent;
b) adding the reagent of the reaction;
c) exciting said photocatalyst with a light source;
d) measuring the time-resolved absorbance spectrum of the photoinduced TiO₂ species;
e) analyzing the intensity and profile of the time decay of the transient absorption signals measured upon irradiation of different photocatalysts in order to determine their relative efficiencies.

In a particular embodiment said TiO₂ photocatalyst is doped with a metal. Preferably said metal is selected from Ru, Pt, Ni, Cu, Fe or a mixture thereof, which allows (1) red-shifting the absorption spectrum of TiO₂ towards the visible region, and (2) delay the electron-hole recombination process within the photocatalyst.

As for the suitable solvent employed in step a), this is preferably selected from water, an organic solvent or a mixture thereof, because of its negligible interaction with the electron-hole pairs photogenerated in the catalyst (i.e. it is photochemically inert). More preferably, said solvent is acetonitrile.

The suspension in step a) is preferably in a concentration of at least 0.01 mg/mL.

As for the light source used in step c), this is preferably a pulsed laser beam. In a more preferred embodiment said pulsed laser beam has a minimum energy of 2 mJ/pulse.

In a particular embodiment of the method of the present invention, the reaction to be carried out, including the variability related to the photocatalyst, light source, solvents and concentrations noted above, is, without being limited thereto, the reduction of CO₂, the photoinduced water splitting or the photodegradation of pollutants; more preferably the reduction of CO₂ wherein said CO₂ is then the reagent of reaction.

In the particular embodiment of the CO₂ photoreduction reaction, we have surprisingly observed that larger transient signals in our TA measurements correlate with larger photocatalyst efficiencies.

The following Examples are offered for illustrative purposes only and are not intended to limit the scope of the present invention in any way.

### EXAMPLES

With our equipment transient absorption experiments can be carried out in solid phase (reflectance mode) or in suspension (transmission mode). Since the measurements described in this application have been carried out in suspension, the setup configuration for this type of experiment is explained below.

In a typical transient absorption experiment, a tuneable and pulsed laser beam (pump beam) is sent to the sample mixture. In this case, the semiconductor is the absorbing species, which is brought to an excited state (transient formation). An electron is then promoted from the valence to the conductance band of this material and an electron-hole pair is created. If the excited state does not interact with other species, it will eventually decay with a given rate to re-form the ground state species through a process called electron-hole recombination. Alternatively, the excited state formed can interact with other species (e.g. CO₂ molecules adsorbed onto the nanoparticle surface), thus giving rise to new transient compounds which may eventually suffer a chemical reaction (e.g. CO₂ reduction). All these events and species are monitored by irradiating the excited sample with a second light beam delivered by a broadband xenon lamp (probe beam), which is focused onto the sample orthogonally with respect to the pump beam and subsequently detected in a photomultiplier tube (PMT) or a CCD camera coupled to a spectrograph. Such detectors measure the absorbance of the probe beam by both the initial material and the transient species formed upon irradiation. Therefore, the difference in absorption with or without the pump beam reports on the absorption of the transient species (transient absorption). Such signal is resolved in time, thus allowing the limited lifetime of the transient species of interest to be determined. In particular, in our experimental set-up the transient absorption can be monitored at any wavelength from 200-900 nm and with a time resolution of 10 ns. Then, it can be fitted using data analysis software to construct transient absorption spectra at given time delays between the pump and probe beam or time profiles of the transient absorption signal at defined wavelengths.

TA measurements have been carried out using mixed-phase TiO₂ or metal-doped TiO₂ semiconductors. The analysis of such semiconductors consisted on the measurement of their transient absorption decays under different atmospheres (air, N₂, CO₂) upon irradiation. The transient formation was achieved irradiating at 355 nm or 532 nm with a Nd:YAG laser using a power of 2-20 mJ/pulse, depending on the type of experiment. The decays were recorded in a range of wavelengths between 300 and 750 nm. Suspensions of TiO₂-based semiconductors (0.01-0.4 mg/mL) in H₂O, organic solvents or a mixture of H₂O/organic solvent were studied in transmittance mode. Stock solutions were prepared, sonicated and diluted until the desired concentration to ensure enough formation of transient species to be detected with minimum scattering effects. Measurements were carried out in 3.5 mL fluorescence cuvettes containing 2.5-3 mL of suspension and under magnetic stirring to obtain an homogeneous suspension. To prepare the desired atmosphere, the corresponding gas was bubbled through the suspension for 5-30 min (depending on the experiment) before the measurement, and gas flowing was maintained during all measurements without bubbling to avoid scattering effects.

### Results and Discussion

### 1. Optimization of the experimental conditions in transient absorption measurements to obtain signals related to the interaction between CO₂ and the photocatalyst

We decided to study the photocatalytic behaviour of the photocatalyst particles when suspended in an appropriate solvent. Acetonitrile (ACN) was the first solvent considered not only because it is photochemically inert but also because it dissolves quite well CO₂. Noticeably, ACN is an aprotic solvent, which simplifies the photochemical evolution of the system, since complete CO₂ photoreduction requires the presence of proton donors in the medium. The commercially available Degussa P25 was used as the benchmark catalyst for these studies. With this photocatalyst the measurement conditions (concentration, suspension pre-treatment and stirring, pump and probe wavelengths, laser power, gas addition, etc.) were optimized to get as large TA signals as possible without observing sample degradation. The following results were obtained:
*Concentration*: if the TiO₂ particle concentration used was too low (0.001 mg/mL), noisy signals were obtained preventing the analysis of the spectroscopic information. However, increasing the concentration too much (0.11 mg/mL) led to high scattering signals that prevented the analysis of the transient absorption decays at short times (for pump-probe delays below 100 ns). The optimum photocatalyst concentration to be used was found to be of the order of 0.01 mg/mL.
*Stirring*: Vigorous stirring during the measurements guaranteed the homogeneity of the particle suspension, which otherwise would precipitate in the bottom of the sample cuvette.
*Sonication*: Sonication of the photocatalyst stock solutions enhanced the dispersion of the particles and prevented the formation of agglomerates.
*Pump beam*: The irradiation wavelength chosen for Degussa P25 was 355 nm, because this catalyst only absorbs in the UV region. It was observed that the laser power at 355 nm could be increased up to certain values to enhance the TA signals (10 mJ/pulse), after which distorted signals were obtained. However, the laser power had to be higher than a threshold limit (2 mJ/pulse); otherwise noisy signals were recorded. The optimum value for the laser power was found to be 3 mJ/pulse.
*Gas addition*: Gas saturation was achieved by bubbling the photocatalyst suspension with the desired gas through a needle for a determined period of time (1 min-30 min). To keep the gas saturation during the entire measurement while avoiding scattering effects due to bubbling, the gas was continuously flowed through the cuvette but keeping the needle above the liquid level.
*Probe beam*: TA signals originated upon photoexcitation of the catalyst had different absorption intensities depending on the wavelength monitored; therefore, decay measurements were carried out setting the monochromator at a wavelength where the transient species showed one of its absorption maxima.

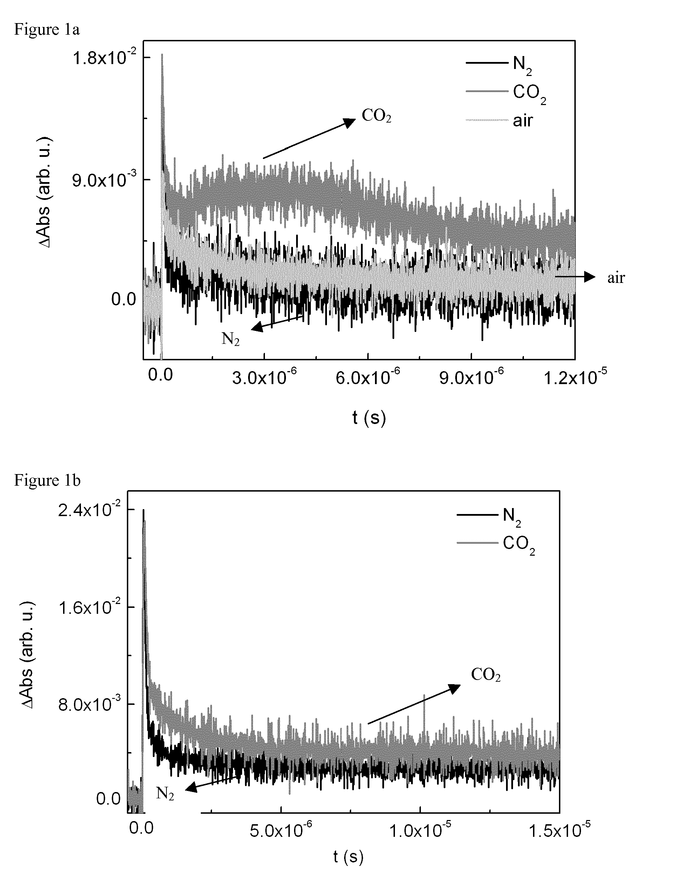

Once optimized these conditions, transient absorption measurements of Degussa P25 suspended in acetonitrile were carried out under CO₂ and N₂ atmospheres. An important and reproducible difference between the corresponding decays was found at these two different conditions. While an exponential decay was obtained in N₂-saturated suspensions (where most of the signal is recovered after a few microseconds), a more complicated decay profile was detected when CO₂ pressure was applied to the suspension (**Figure 1**). This behaviour was not only reproducible, but also reversible since multiple cycles N2 → CO₂ → N₂....could be repeated recovering each time the corresponding signal. Similar effects were observed when air was added to the sample instead of N₂ (**Figure 1**). Moreover, this behaviour was totally independent of the gas used in the first experiment of the cycle. Finally, the intensity of the TA signal specifically detected for the samples under CO₂ atmosphere was found to increase with CO₂ pressure by taking measurements at different times of gas saturation (from 30 s to 5 min).

**Figure 1** shows that, under CO₂ atmosphere, there is a rapid decay in the TA signal within the initial 300-400 ns, followed by an increasing signal which lasts for several microseconds. This must be ascribed to the formation of a new species, a situation that only occurs when the irradiated photocatalyst is in contact with CO₂ (TiO₂-CO₂ transient). Afterwards, the signal recovers up to the baseline indicating the disappearance of the TiO₂-CO₂ transient formed. We have tentatively attributed this new TA signal observed in the presence of CO₂ to the additional amount of trapped holes generated in the photocatalyst that arise from the transfer of a photogenerated electron to an adsorbed CO₂ molecule to yield a [TiO₂^{•+} -CO₂^{•-}] type of adduct. As shown below, we have surprisingly found that the intensity of such signal reports on the photocatalyst efficiency for CO₂ photoreduction.

The behaviour so far discussed for TiO₂ in ACN suspensions was also observed for other suspensions of the photocatalyst in different solvents, either aprotic (chloroform) or protic (methanol, isopropanol, water). This proves the universality of the methodology proposed in this patent. In case of water, however, it must be emphasized that the experimental conditions had to be re-optimized to obtain measureable TA signals arising from TiO₂-CO₂ interaction. Our experiments allowed us concluding that the main limitation of using water in these experiments is the low solubility of CO₂ in this solvent (about ten times lower than in acetonitrile at room temperature). Two different approaches were found to allow overcoming this limitation and increase CO₂ solubility: (1) decrease the temperature; (2) use basic conditions, as shown in Figure **1****.**

**Study of the interaction between CO₂ and photoexcited TiO₂-based photocatalysts by means of transient absorption spectroscopy**

After optimizing the experimental conditions for investigating the interaction between CO₂ and commercial Degussa P25 TiO₂ nanoparticles via transient absorption measurements, other TiO₂-based photocatalysts were investigated. Noticeably, the comparison of the TA decay of the photocatalyst in CO₂ atmosphere with respect to N₂ atmosphere reports on the efficiency of the electron transfer between TiO₂ and CO₂ that should eventually result in CO₂ photoreduction.

In a first step, we focused on the qualitative analysis of the photoinduced interaction between CO₂ and photoexcited TiO₂-based catalysts by means of transient absorption measurements. All the samples, mostly metal-doped (1 wt %) TiO₂ particles, were measured at identical conditions (concentration, temperature, stirring rate, gas bubbling time, etc.). To start with, suspensions of the catalyst nanoparticles (-0.03 mg/mL) in acetonitrile were prepared and the corresponding TA decays were recorded under air, N₂ and CO₂ atmospheres. Two different irradiation conditions were considered: 1) λ_{exc} = 355 nm and 2) λ_{exc} = 532 nm. The results obtained are summarized in **Table 1**, which indicates if the additional TA signal arising from electron transfer between TiO₂ and CO₂ was observed (YES) or not (No signal) for each sample and irradiation condition.

**Table 1: Results of the TA study of different TiO₂-based photocatalysts irradiated at 355 nm or 532 nm and suspended in acetonitrile.**

| | **CO₂-TiO₂TA signal** | |
|---|---|---|
| **TiO₂ Photocatalyst (%.wt) (calcination temperature)** | **λ_{exc}= 355 nm** | **λ_{exc}= 532 nm** |
| TiO₂ Degussa P25 | Yes | No signal |
| TiO₂ signle phase | Yes | No signal |
| 1 % Cu (500 °C) | Yes | No signal |
| 1% Cu (600 °C) | Yes | Yes |
| 1% Ru (500°C) | Yes | Yes |
| 1% Ru (600 °C) | Yes | Yes |
| 1% Pt (500 °C) | Yes | Weak signal |
| 1% Pt (600 °C) | Yes | Yes |
| 1% Ni (500 °C) | Yes | Weak signal |
| 1% Ni (600°C | Yes | Weak signal |
| 1% Cu/Fe (500°C) | Yes | Yes |
| 1% Cu/Fe (600 °C) | Yes | Yes |
| Aerogel (Fe) 442 °C | Yes | No signal |
| Aerogel (Fe) 575 °C | Yes | No signal |
| Aerogel (Cu/Fe) | Yes | Yes |

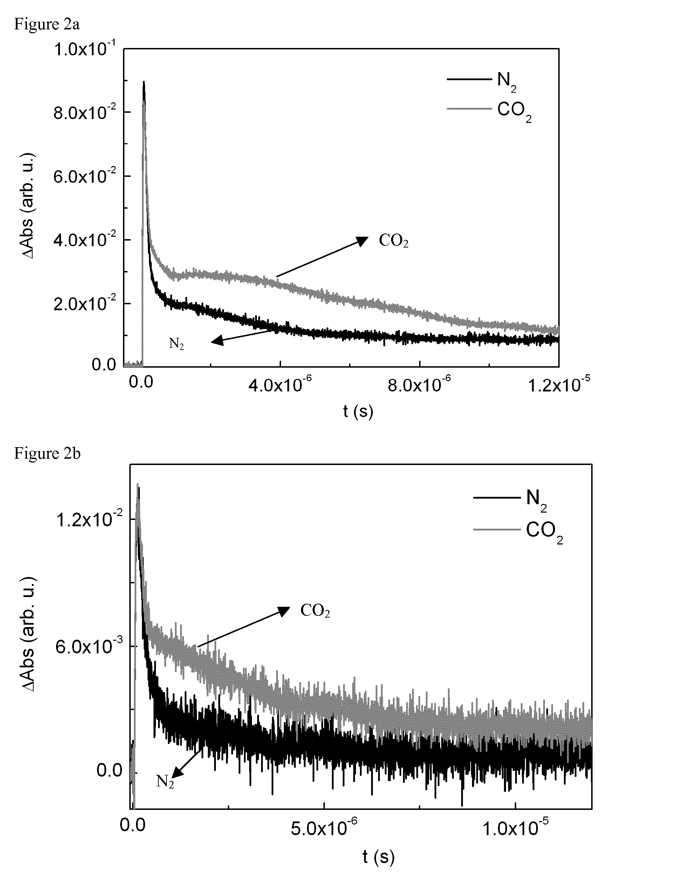

The most relevant result from these measurements is that all the samples suspended in acetonitrile displayed the TA signal corresponding to the interaction of photoexcited TiO₂ with CO₂ upon excitation at 355 nm. When excited at 532 nm, the samples investigated presented different behaviours. For example, Degussa P25, which does not absorb at 532 nm, did not show any TA signal under N₂ or CO₂ atmosphere. As expected and found for other samples with similar optical properties, the lack of absorption in this region inhibits the photocatalyst excitation and, therefore, the formation of trapped holes and electrons that could eventually interact with CO₂ molecules. On the other hand, the CO₂ effect was observable upon irradiation at 532 nm of metal-doped TiO₂ materials that absorb in the visible part of the spectrum. For example, Ru and Pt-doped TiO₂ catalysts showed relatively intense TA signals and an important CO₂ effect when irradiated at 532 nm (**Figure 2**).

### Quantification of the CO₂ effect on TiO₂-based photocatalysts transient absorption signal as a measure of the catalytic activity and comparison of the transient absorption study values with the photoreactor yield data

After demonstrating that transient absorption measurements were reporting on the photoinduced interaction between CO₂ and photoexcited TiO₂-based catalysts, the next step consisted of providing quantitative results on the efficiency of each catalyst that would permit a direct comparison between them. For that it was necessary to demonstrate first that the TiO₂-CO₂ interaction measured in our TA measurements could be related to the CO₂ conversion in photoreduction experiments. With this aim, we compared our results with those obtained in a large scale photoreactor, in which product formation is detected by means of a GC-MS detector. In such photoreactor, the working conditions consist of a layer of the photocatalyst irradiated from the top and under an atmosphere of humid CO₂ in the gas phase, i.e. the photoreduction process occurs in the solid-gas interface.

The comparison with the results from the photoreactor measurements were carried out with transient absorption experiment results obtained for suspensions of the same photocatalyst particles. In fact, catalytic materials obtained form the same production batches were analyzed (metal-doped TiO₂ nanoparticles, 0.5% wt). In this way, the quantitative data obtained for each photoacatalyst from the transient absorption study could be compared with the CO₂ photoreduction yields measured in the photoreactor (determined as the sum of the following detected products: CO+CH₄+C₂H₄+C₂H₆+CH₃0H+C₂H₅OH). To quantify the effect of the CO₂ in the transient absorption measurements, we subtracted the transient signal areas registered in presence of N₂ and CO₂. The resulting area values were strictly related to the efficiency of the hole formation in TiO₂ resulting from electron transfer from the catalyst to CO₂. Moreover, since it was observed that the excitation light intensity was affecting the actual profile of the transient absorption decays, measurements were taken at two different irradiation conditions: 2.0 and 4.5 mW. In both cases, light at 355 nm was used as the excitation source, thus closely reproducing the excitation conditions adopted in the photoreactor measurements (λ_{exc} = 365 nm). Finally, to investigate the effect of the solvent, two sets of experiments were performed where the photocatalyst nanoparticles were suspended in acetonitrile and water.

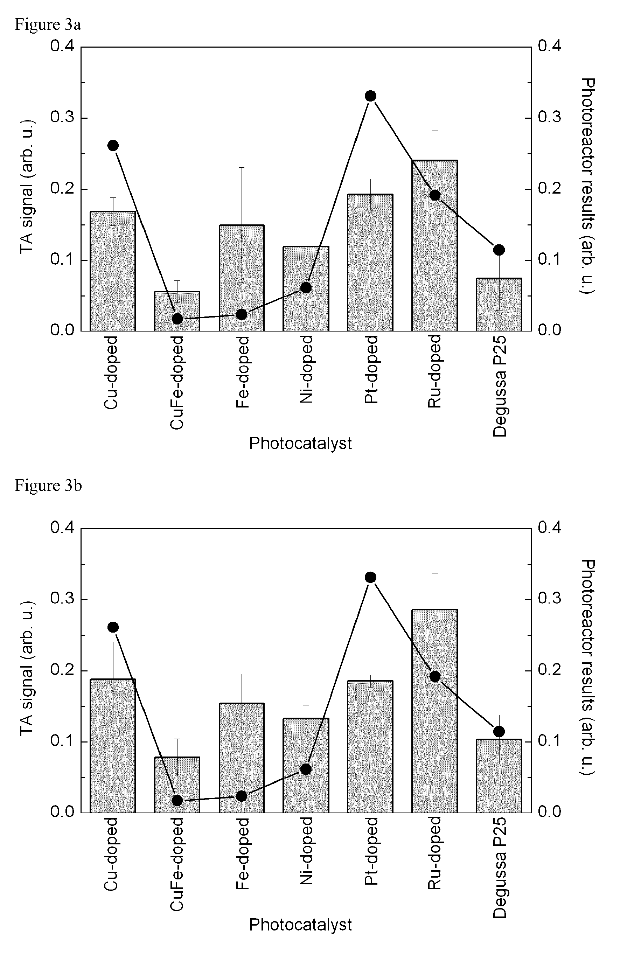

**Figure 3** shows the comparison of the results obtained in transient absorption measurements of acetonitrile suspensions with respect to the photoreactor data. The error bars derive from the repetition of the same series of measurements carried out for each photocatalyst to obtain an average value of the efficiency of TiO₂-CO₂ electron transfer. The error bars take into account the possible experimental error, but also the fact that the measurements in the reactors and in the transient absorption spectroscopy were carried out in different experimental conditions.

The TA measurements in acetonitrile suspensions are in good agreement with the results obtained from the photoreactor (**Figure 3**). In particular, it can be noted that the three most efficient catalysts according to the transient absorption measurements (Ru-, Pt-, Cu-doped TiO₂) are the same found in photoreactor experiments. Moreover, identical results were obtained using different excitation power. Thus, although the decay profile is altered by increasing the excitation power, it does not affect the quantitative results obtained. This means that, until a certain limit, the irradiation intensity does not influence the relative efficiencies of the TiO₂-CO₂ electron transfer. In fact, although less intense excitation light from a continuous lamp is used in the photoreactor experiments instead of high-intensity pulsed laser light, a meaningful correspondence is found between the relative catalyst efficiencies determined for the photoreduction yield of CO₂ and the TA signal intensities measured. In spite of this, non-negligible differences are observed between the two sets of results (photoreactor vs transient absorption study), which could be explained by the fact that: (a) the experimental working conditions are not equal, and more importantly, (b) strikingly different experimental signals are measured. In case of the photoreactor experiments, direct measurement of the products arising from CO₂ photoreduction is achieved. In our case, however, we only monitor the first step of this process, which consists in the electron transfer from the photoexcited TiO₂ catalyst and CO₂ molecules. Therefore, the surprisingly good agreement observed between both types of results demonstrates the applicability of the methodology proposed in this application for the fast, simple and cheap screening of the photocatalytic activity of TiO₂-based materials.

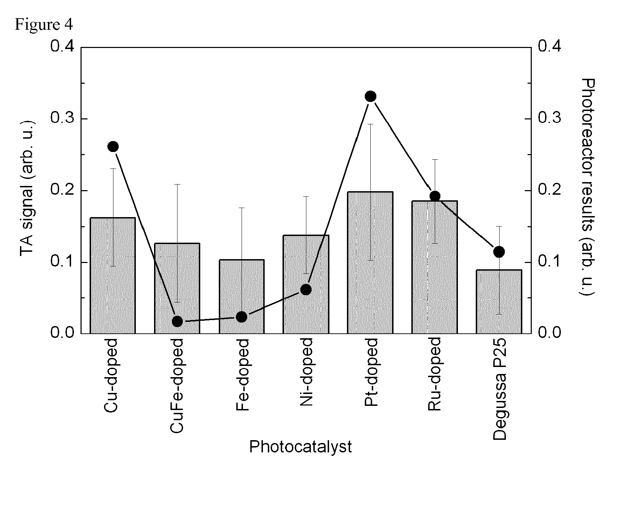

To demonstrate the universality of this approach, the same type of experiments were repeated with the TiO₂ particles suspended in water. As also observed in acetonitrile, the TiO₂-CO₂ electron transfer efficiencies retrieved from our TA measurements nicely reproduce the photocatalyst activities determined from photoreactor experiments (**Figure 4**). However, it must be noted that larger experimental error margins were found in this case. This was due to the instability of TiO₂ suspensions in basic water, which led to nanoparticle aggregation and eventual precipitation, as confirmed by SEM. As a consequence, TA measurements performed in water suspensions were very sensitive to small changes of the experimental conditions, which resulted in a significant dispersion in photocatalytic activities measured for the same samples upon consecutive measurements. In spite of this, the qualitative agreement with the photoreactor data further proves the capability of our methodology to predict the photocatalytic activity of TiO₂-based materials.

In the present invention it is demonstrated that transient absorption measurements allow monitoring the interaction between CO₂ and TiO₂ photocatalysts under irradiation by non-time and non-material consuming experiments, thus saving the time and material costs required in standard evaluation of photocatalyst efficiencies in photoreactors.

The photocatalytic systems were suspended in acetonitrile, other organic solvents or water. The efficiency of the electron transfer process between the irradiated catalyst and CO₂ molecules, which constitutes the first step in CO₂ photoreduction, could be quantified by comparing the transient decay signals obtained when the photocatalyst suspensions were saturated with CO₂ and N₂ atmospheres. In particular, we observed that:
1) The transient absorption technique for TiO₂-based nanoparticles suspensions could be used to detect the initial interaction between the excited photocatalysts and CO₂;
2) All the tested catalysts were interacting with CO₂ when excited at 355 nm;
3) Those catalysts with an extinction coefficient different from zero at 532 nm, like Pt-and Ru-loaded TiO₂ nanoparticles, were undertaking TiO₂-CO₂ electron transfer under irradiation with visible light. Therefore, this result shows that the technique can easily determine whether a photocatalyst is suitable for a photoreactor working with visible light;
4) Quantitative comparison between the different tested photocatalysts could be carried out and the results showed to be reproducible;
5) Semiquantitative agreements are observed between the transient absorption spectroscopy results and the photoreactor reaction yields.

## Claims

1. Method for predicting the efficiency of a TiO₂ photocatalyst in a light-induced reaction comprising the steps of:
a) preparing a suspension of a TiO₂ photocatalyst with a suitable solvent;
b) adding the reagent of the reaction;
c) exciting said photocatalyst with a light source;
d) measuring absorbance spectrum of the photoinduced TiO₂ species;
e) analyzing the intensity and profile of the time decay of the transient absorption signals measured upon irradiation of different photocatalysts in order to determine their relative efficiencies.

2. Method according to claim 1, wherein the TiO₂ photocatalyst is doped with a metal.

3. Method according to claim 2, wherein said metal is selected from Ru, Pt, Ni, Cu, Fe or a mixture thereof.

4. Method according to any of the preceding claims, wherein said light source is a pulsed laser beam.

5. Method according to claim 4, wherein said pulsed laser beam has a minimum energy of 2mJ/pulse.

6. Method according to any of the preceding claims, wherein the solvent is selected from water, an organic solvent or a mixture thereof.

7. Method according to claim 6, wherein said solvent is acetonitrile.

8. Method according to any of the preceding claims, wherein the suspension in step a) is in a concentration of at least 0.01 mg/mL.

9. Method according to any of the preceding claims, wherein said reagent in step b) is CO₂ in a reaction for reducing CO₂.

10. Method according to any of the preceding claims, wherein said light-induced reaction is the photoinduced water splitting or the photodegradation of pollutants.
